# FASCICULE DE BREVET EUROPEEN

(11) **EP 0 466 628 B1**
(45) Date de publication et mention de la délivrance du brevet: **28.12.1994**
(21) Numéro de dépôt: 91480101.4
(22) Date de dépôt: 03.07.1991
(51) Int. Cl.: B60G 17/00, B60G 11/32, B60G 15/06, F16F 3/00

(54) **Procédé de suspension du type utilisant une raideur plus grande dans la course de "rebond" que dans la course de "choc" comportant un moyen pour adoucir le passage d'une raideur à l'autre et son dispositif de mise en oeuvre**
Aufhängungsverfahren bei dem eine grössere Steifigkeit in Zustand "Zug" als in Zustand "Druck" benutzt wird, wobei ein Mittel verwendet wird, um den Übergang von einer Steifigkeit zu einer anderen zu dämpfen, und Mittel zur Durchführung des Verfahrens
Procedure for a suspension of the type having a stiffness which is greater during rebound than during shock, incorporating means for softening the change from one stiffness to the other and means for implementing the procedure

(30) Priorité: 06.07.1990 FR 9008859
(43) Date de publication de la demande: 15.01.1992
(73) Titulaire: MAURO BIANCHI S.A., F-92800 Puteaux (FR)
(72) Inventeur: Bianchi, Mauro, F-83310 La Garde Freinet (FR)
(74) Mandataire: Hautier, Jean-Louis

(56) Documents cités:
- EP-A- 0 000 287
- EP-A- 0 318 816
- EP-A- 0 371 196
- EP-A- 0 389 828
- DE-A- 3 835 917
- DE-C- 630 427
- FR-A- 752 886
- FR-A- 1 052 883
- FR-A- 1 181 645
- FR-A- 1 376 235
- FR-A- 2 125 217
- FR-A- 2 490 305
- GB-A- 349 582
- GB-A- 1 228 842
- GB-A- 1 331 782
- GB-A- 2 164 417
- US-A- 3 002 743
- US-A- 3 297 312
- US-A- 3 720 425
- WO 91 04876

## Description

L'invention a pour objet une suspension du type utilisant une raideur plus grande dans la course de "rebond" que dans la course de "choc" comportant un moyen pour adoucir le passage d'une raideur à l'autre.

Selon une caractéristique additionnelle, il est prévu un moyen pour faire varier la position de référence en "charge ordre de marche" en fonction du nombre de personnes et la quantité de fret dans le véhicule et lorsque ledit véhicule ne comporte pas de dispositif de correction d'assiette.

L'état de la technique peut être défini par les brevets suivants :
- Demande de brevet n°89.06533 déposée le 16.05.89 qui décrit un procédé de suspension et son dispositif pour la mise en oeuvre. Il consiste à disposer le châssis du véhicule automobile en sandwich entre deux suspensions indépendantes disposées en opposition, l'une classique, dite suspension à flexibilité "négative", l'autre dite suspension à flexibilité "positive", la suspension à flexibilité "positive" est montée en opposition à la flexibilité "négative".
   Des moyens de réglage autorisent le réglage simultané de la précontrainte de la suspension à flexibilité "négative" et de la suspension à flexibilité "positive".
- WO 91 04876 déposée le 5 octobre 1989 qui décrit une suspension à flexibilité ou raideur variable en dynamique correspondant au préambule de la revendication 1. Le procédé de suspension utilise un ou plusieurs éléments élastiques montés en opposition l'un par rapport à l'autre, de manière à imprimer à la suspension du véhicule une variation de raideur ou de flexibilité à une ou plusieurs pentes sur la courbe (choc-détente et effort de compression) et ladite utilisation des raideurs ou flexibilité différentes est localisée lors des débattements de la suspension.

L'invention se distingue de cette suspension connue par un moyen d'adoucissement du changement de raideur.

Selon un mode de réalisation de l'invention, le moyen pour adoucir le passage d'une raideur à l'autre consiste en l'utilisation d'un élément élastique additionnel, faisant office de butée progressive, monté en série avec le ressort additionnel de la suspension selon l'invention, la raideur dudit élément élastique additionnel croît rapidement vers une valeur asymptotique.

Selon un mode de réalisation, l'élément élastique additionnel monté en série avec le ressort auxiliaire est un support de révolution en caoutchouc qui est pourvu d'une butée interne qui délimite la course exacte d'intervention dudit anneau élastique.

La raideur de l'anneau élastique peut varier en pratiquant un ou plusieurs trous horizontaux dans la partie médiane.

Des ressorts auxiliaires mécaniques du type hélicoïdal peuvent avoir des caractéristiques différentes, une partie peut avoir une flexibilité linéaire, l'autre partie peut avoir, du fait de sa structure, une flexibilité variable.

Les ressorts peuvent être utilisés comme moyen pour adoucir le passage d'une raideur à une autre raideur.

Selon d'autres modes de réalisation, les butées additionnelles de mise en appui progressive sur le ressort auxiliaire sont pourvues d'une courbe de raideur possédant leur propre asymptote.

Selon un autre mode de réalisation, le moyen pour adoucir le passage d'une raideur à l'autre, consiste en l'utilisation d'un ressort auxiliaire à flexibilité variable. Ces ressorts auxiliaires à flexibilité variable sont souvent des ressorts du type pneumatique ou oléo-pneumatique.

L'élément élastique du ressort auxiliaire reçoit une pression initiale de pressurisation notamment.

Selon l'invention, l'essentiel est de bien positionner le point de rupture entre les deux pentes ou deux raideurs, que ce point de rupture soit adouci ou pas en une courbe.

Il est indispensable de réajuster la précontrainte en fonction de la charge ou d'ajuster le point de cassure de raideur lors de chacune des variations de charge du véhicule.

Ce moyen de réglage intervient bien entendu dans le cas où le véhicule n'est pas doté d'un correcteur d'assiette.

Selon un mode de réalisation où l'on utilise deux ressorts (l'un ressort principal de sustentation, l'autre ressort auxiliaire monté en opposition selon l'invention), le moyen de réglage est un vérin hydraulique placé en "interface" entre la partie mobile de la suspension (classique) et le ressort auxiliaire selon l'invention.

La tige du piston mobile est solidaire de la suspension tandis que le corps du vérin prend appui sur le ressort auxiliaire, le vérin est pourvu de deux chambres supérieures et inférieures au piston qui communiquent entre elles par une canalisation dont le passage de l'huile est contrôlé par une électrovanne, le vérin comporte, dans sa partie haute, une réserve de gaz comprimé maintenant l'huile utilisée sous pression par l'intermédiaire d'un plancher séparateur flottant disposé entre cette réserve et la chambre supérieure ; la chambre inférieure contient un ressort de mise en appui, la tête du piston est montée libre sur la tige qui ne comporte qu'une butée d'extrémité de la tige qui fait office de butée progressive de mise en appui.

L'électrovanne ouvre le passage de l'huile entre les deux chambres pour autoriser l'ajustement après la charge de manière à ce que le piston soit en appui contre la butée de la tige, l'électrovanne est fermée pendant la route.

Selon un autre mode de réalisation, le ressort auxiliaire, monté en opposition au ressort principal de sustentation, est monté coaxialement avec le vérin hydraulique qui est placé en "interface" entre la partie mobile de la suspension classique ou du ressort de suspension et le ressort auxiliaire.

Selon un autre mode de réalisation, le procédé combine un amortisseur avec un ressort auxiliaire CONTRACTIVE avec un moyen de correction automatique du point d'attaque.

Le corps du vérin est solidaire d'un fourreau porteur d'une butée sur laquelle vient prendre appui le ressort auxiliaire. Ce ressort auxiliaire est solidaire, par son autre extrémité, par une butée d'appui, du corps de l'amortisseur. Le piston du vérin est solidaire de la tige de l'amortisseur. Un ressort interne de mise en appui tend à remonter le corps du vérin, donc l'ensemble équipage corps du vérin et fourreau, par rapport au piston, donc par rapport à la tige d'amortisseur. Un petit élément de pressurisation (accumulateur) assure, de manière continue, le parfait remplissage du vérin.

Le vérin est divisé en deux chambres séparées par le piston qui est fixe sur la tige de l'amortisseur, les deux chambres communiquent par une canalisation qui est commandée par une électrovanne de pressurisation, la chambre haute est pourvue d'un ressort de mise en appui, un élément de pressurisation est branché sur la canalisation qui relie les deux chambres et ce, de manière à ce que l'ensemble de l'équipage vérin et fourreau du ressort auxiliaire se déplace par le ressort de mise en appui dès l'ouverture de l'électrovanne pour le réglage en fonction de la charge.

Selon un autre mode de réalisation où le piston est fixe sur la tige, le gaz de pressurisation est enfermé dans le vérin entre le piston et une cloison plancher flottante traversée par la tige de l'amortisseur ; l'électrovanne est intégrée dans le corps du vérin sous la forme d'un clapet tenu en appui sur son siège par un joint torique faisant office de ressort. Ledit clapet quitte son siège quand le solénoïde, qui est situé au dessous, est mis sous tension.

L'huile peut alors se déplacer entre le haut et le bas du vérin en empruntant l'espace annulaire périphérique au vérin.

Lorsque le solénoïde n'est pas sous tension, le clapet reste fermé et le vérin verrouillé.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique d'un moyen pour adoucir le passage d'une raideur à l'autre, ledit moyen est un anneau élastique monté en série avec le ressort additionnel de la suspension selon l'invention.

Les figures 2 à 6 représentent les courbes de raideurs.

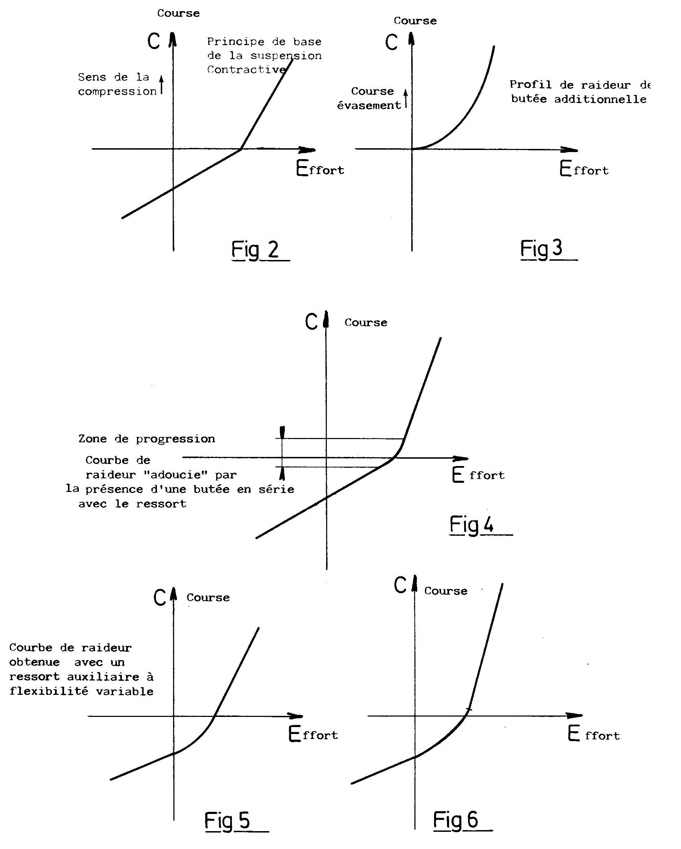

La figure 2 représente la courbe de raideurs du montage de base à deux ressorts.

La figure 3 représente la courbe de raideurs du type de butée progessive à utiliser.

La figure 4 représente la courbe du montage de base enrichie d'une butée de progression.

La figure 5 représente la courbe de raideurs du montage utilisant un ressort à flexibilité variable.

La figure 6 représente la courbe de raideurs de montage utilisant un ressort de type pneumatique ou oléopneumatique. Un compromis peut être obtenu en établissant une pression initiale (de pressurisation notamment) dans l'élément élastique. On observe alors une rupture de courbe néanmoins beaucoup moins brutale que dans le cas de deux ressorts mécaniques de la solution de base.

Ces aménagements traduisent un souci de bien sauvegarder l'aspect confort du véhicule tandis que la solution de base, sans adoucissement de rupture de courbe des raideurs, est plus orientée vers la recherche d'une priorité au comportement, ce qui est le cas des véhicules à caractère sportif.

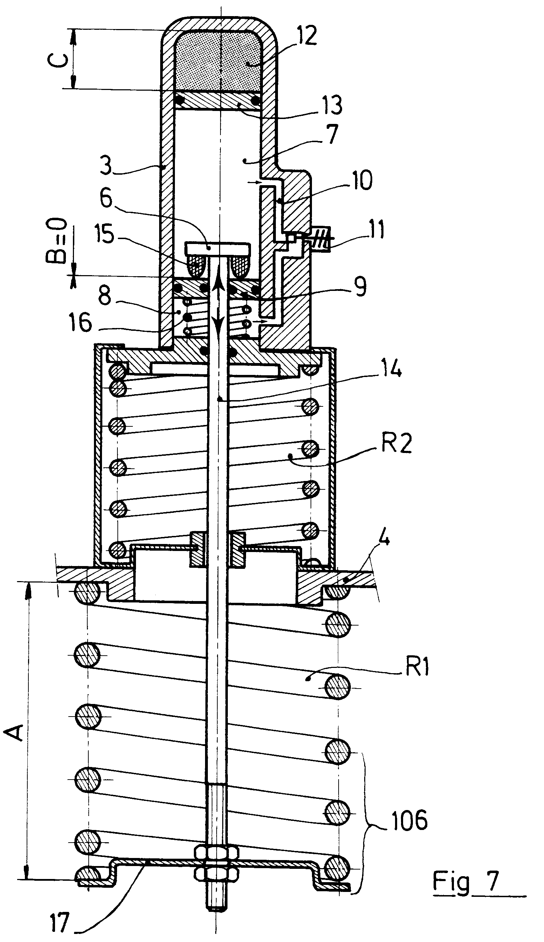

La figure 7 est une vue schématique d'un mode de réalisation de correction automatique du point d'attaque du ressort auxiliaire et ce, de manière à réajuster la précontrainte en fonction de la charge, autrement dit, d'ajuster le point de cassure de raideur lors de chacune des variations de charge du véhicule. Le moyen de réglage est un vérin hydraulique placé en "interface" entre la partie mobile de la suspension élastique et le ressort auxiliaire. Dans ce mode de réalisation, la tige du piston est solidaire de la suspension tandis que le corps du vérin prend appui sur le ressort auxiliaire. Le piston est monté libre sur la tige qui ne comporte qu'une butée d'extrémité de la tige qui fait office de butée progressive de mise en appui.

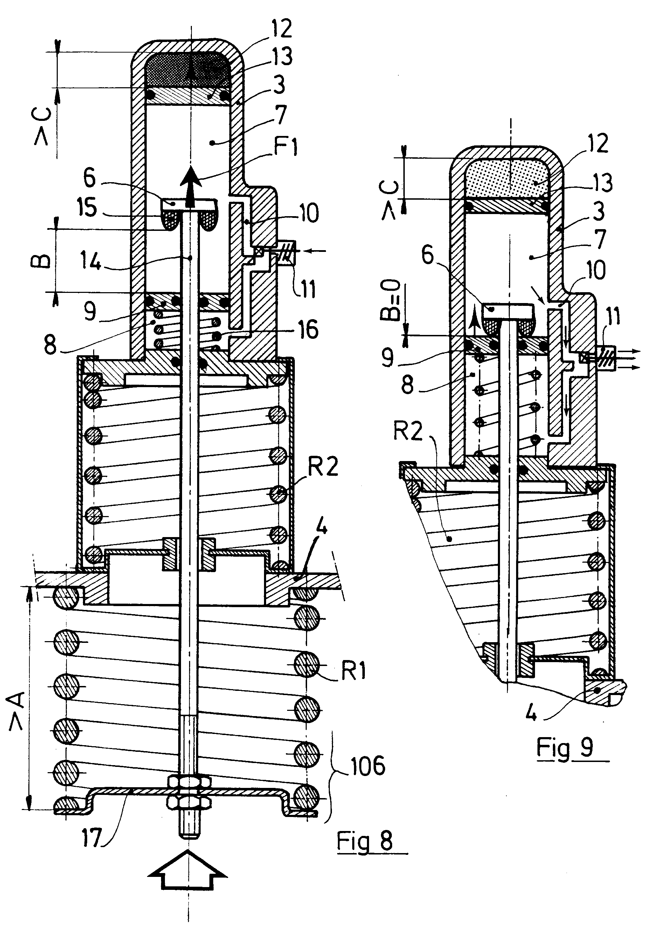

La figure 8 est une vue du mode de réalisation représenté à la figure 7 où l'électrovanne est fermée et le véhicule est en charge selon les flèches, la tige s'enfonce, le ressort auxiliaire est libéré.

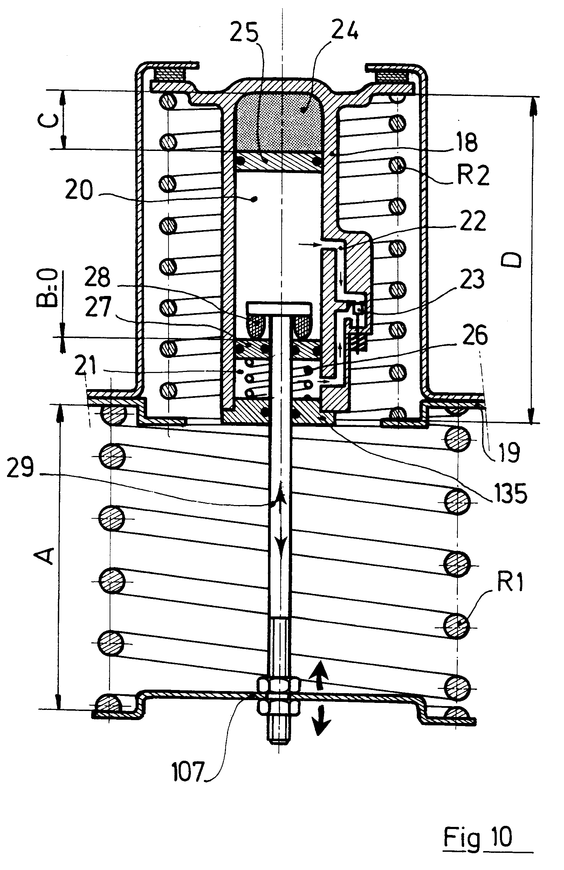

La figure 9 est une vue d'un détail des figures 7 et 8 où, après la charge du véhicule, l'électrovanne est ouverte, le piston monte se mettre au contact de la butée de la tige sous l'effet de la poussée du ressort de mise en appui. Après cet ajustage, l'électrovanne est fermée.

La figure 10 représente un autre mode de réalisation où le ressort auxiliaire est monté coaxialement autour du vérin hydraulique.

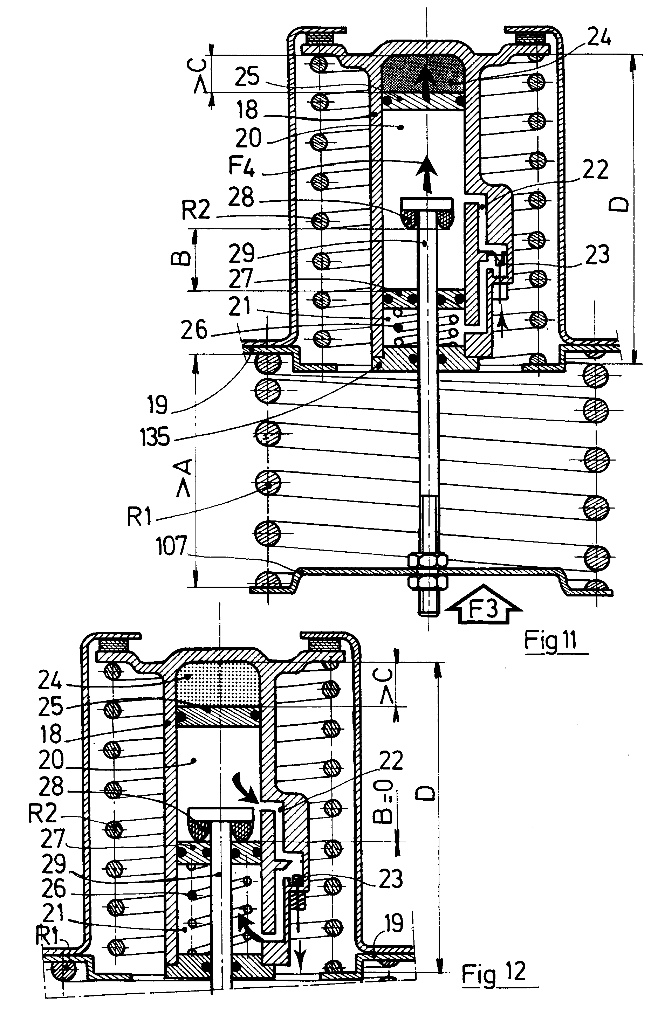

La figure 11 représente le mode de réalisation représenté à la figure 10, mais où le véhicule est chargé, la tige s'enfonce dans le vérin, l'électrovanne est fermée.

La figure 12 représente le mode de réalisation représenté dans les figures 10 et 11 où l'électrovanne est ouverte pour autoriser la remise en appui du piston dans le vérin et ce, sans l'effort du ressort de mise en appui.

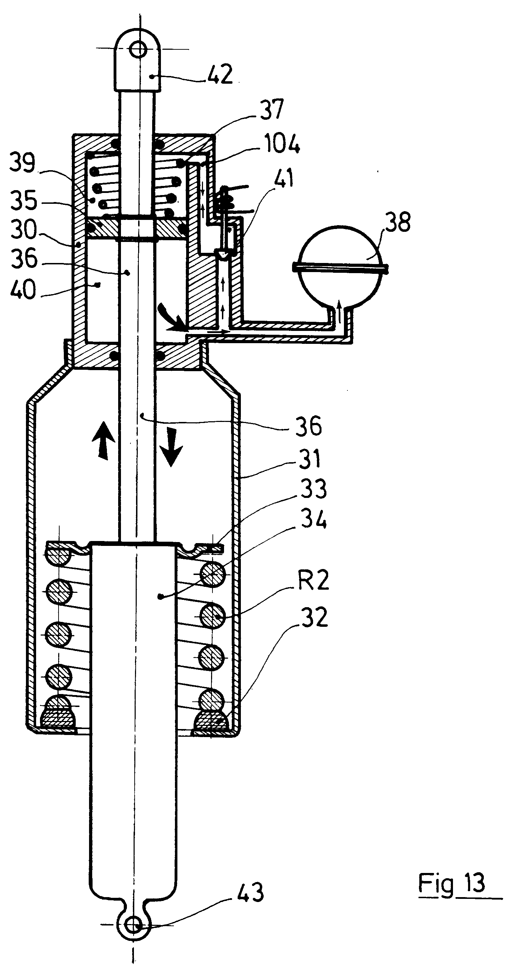

La figure 13 représente un mode de réalisation où le vérin hydraulique est placé entre la tête du piston fixé sur l'extrémité de la tige de l'amortisseur tandis que le corps du vérin se prolonge par une chambre du ressort auxiliaire qui vient, coaxialement, entourer le corps de l'amortisseur sur lequel elle est montée coulissante.

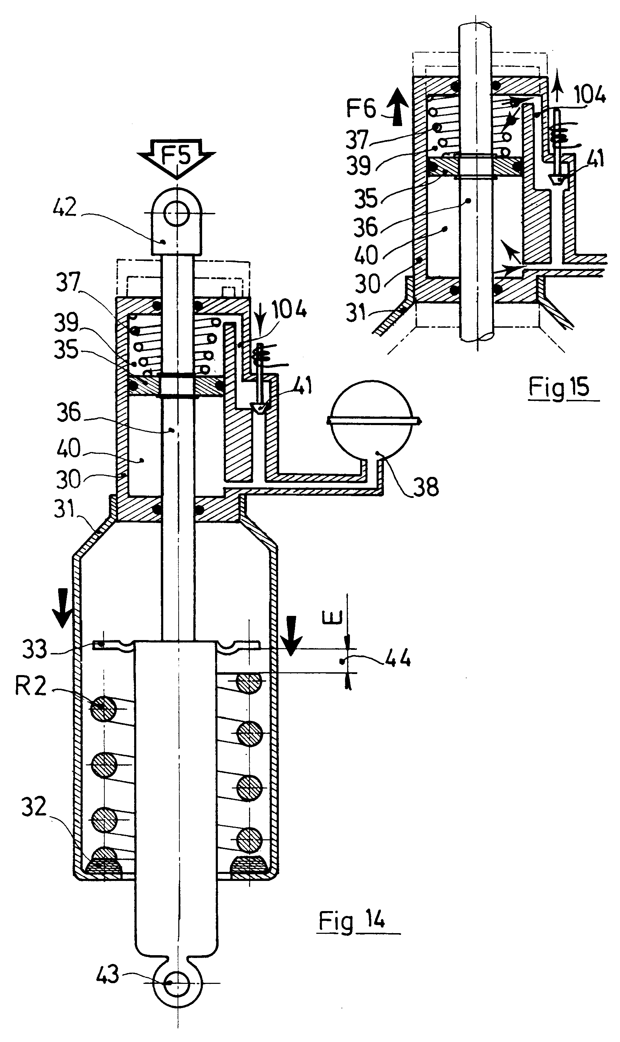

La figure 14 est une vue du mode de réalisation représenté à la figure 13 où l'électrovanne est fermée et où le véhicule est en charge, (voir les flèches qui indiquent l'entrefer qui existe, libérant ainsi le ressort auxiliaire).

La figure 15 est une vue de détail du mode de réalisation représenté dans les figures 13 et 14 mais où l'électrovanne est ouverte de manière à permettre le réglage ou l'ajustage.

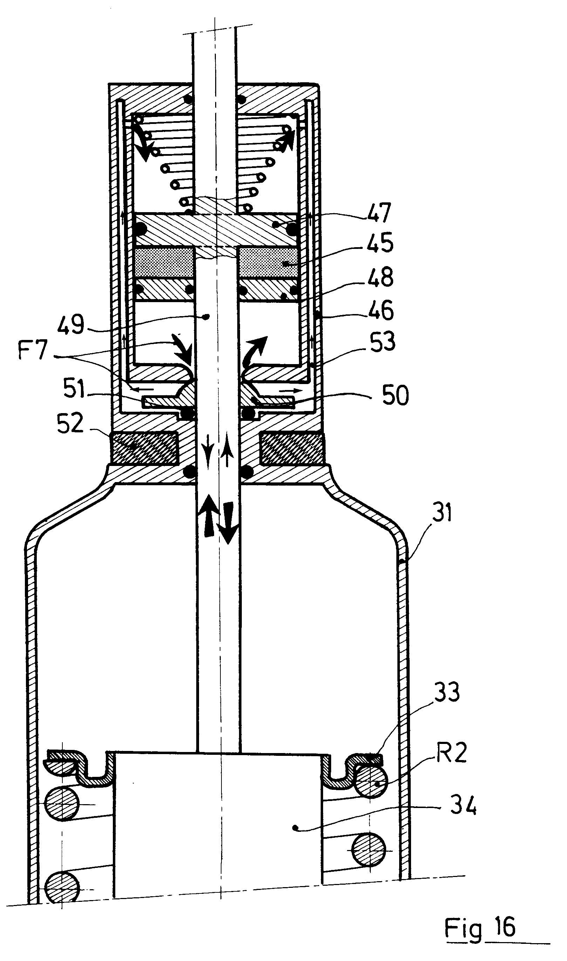

La figure 16 est une vue représentant un mode de réalisation d'une combinaison amortisseur-ressort auxiliaire selon l'invention. Le piston est fixe sur la tige, le gaz de pressurisation est enfermé dans le vérin entre le piston et une cloison plancher flottant traversée par la tige de l'amortisseur, l'électrovanne est intégrée dans le corps du vérin et actionnée par un solénoïde.

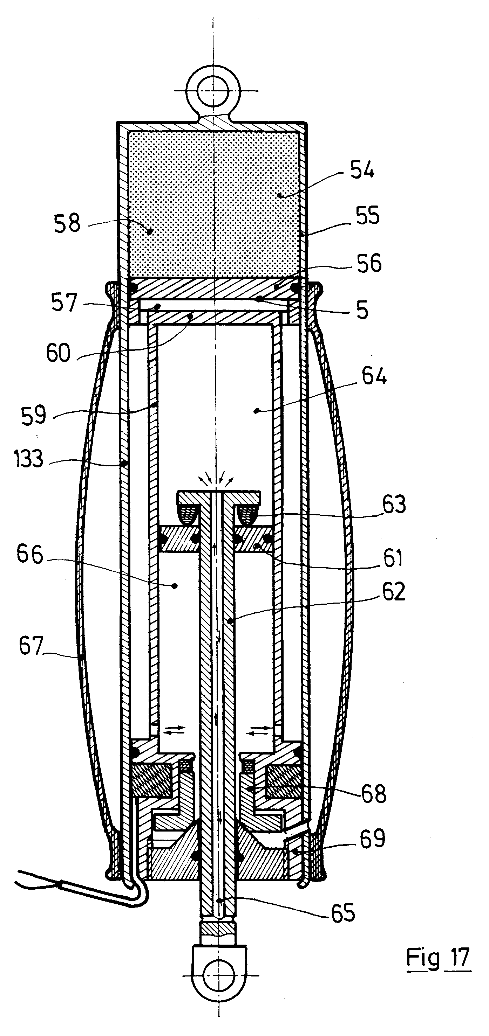

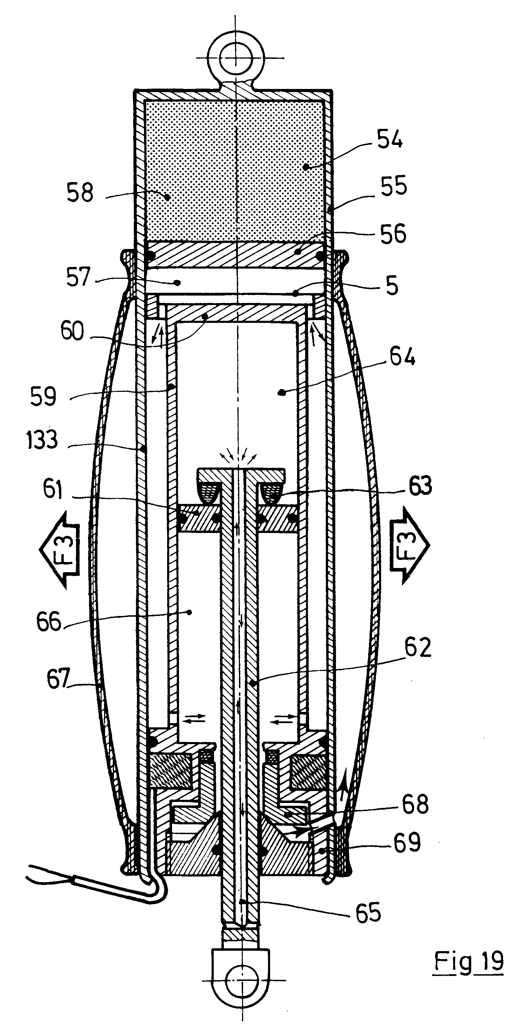

Les figures 17, 18 et 19 représentent un ressort auxiliaire oléopneumatique à correction automatique du point d'attaque déclenché par commande électro magnétique. Ce mode de réalisation est monté en supplément et en parallèle des éléments d'origine de la suspension du véhicule.

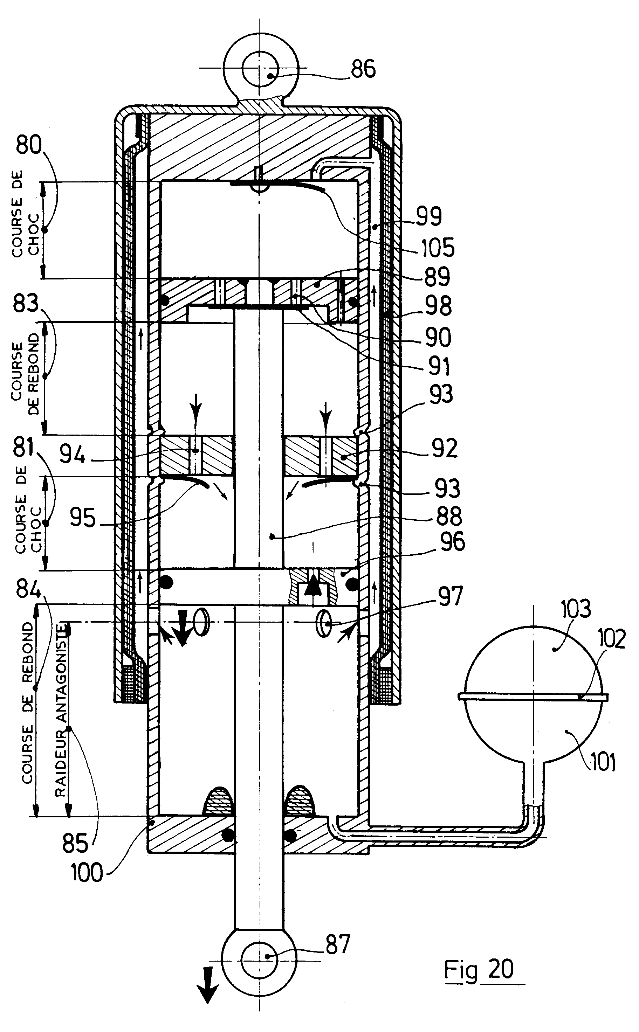

Les figures 20, 21 et 22 sont relatives à un mode de réalisation regroupant les fonctions d'amortissement et de ressort auxiliaire. Ce mode de réalisation n'est pas doté de correction du point d'attaque du ressort auxiliaire. Il utilise un amortisseur oléopneumatique télescopique. Il est pressurisé par un accumulateur oléopneumatique qui fait également office de ressort auxiliaire.

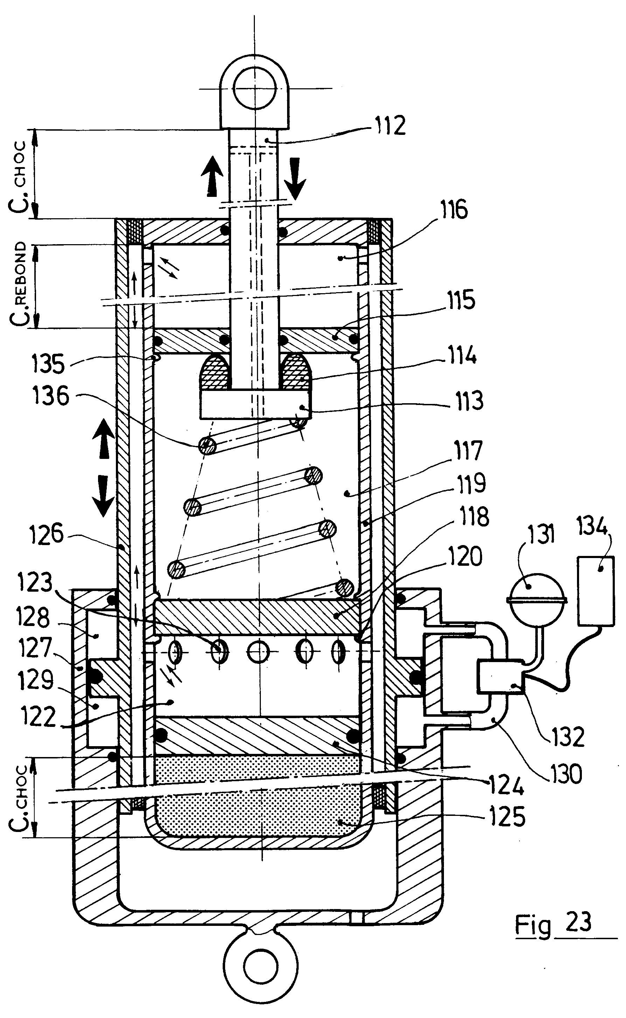

La figure 23 représente schématiquement un autre mode de ressort auxiliaire additionnel à une suspension classique utilisant deux vérins oléopneumatique. Un vérin fait office de ressort auxiliaire et l'autre vérin fait office de moyen de réglage de l'amortissement en fonction de la charge.

La suspension "CONTRACTIVE" (marque déposée), objet des deux demandes de brevets ci-dessus citées, possède, pour principale caractéristique, de doter le véhicule sur lequel elle est installée, d'une suspension dont la raideur est plus grande dans la course se situant entre la position en "charge ordre de marche" et la position "roues pendantes" que dans la course se situant entre la position en "charge ordre de marche" et la position "suspensions écrasées jusqu'aux butées de choc". Pour simplifier, la suspension CONTRACTIVE se caractérise par l'existence d'une raideur plus grande dans la course de "rebond" que dans la course de "choc". Lorsque celles-ci sont représentées graphiquement, on peut observer que ce changement de raideur se traduit par une rupture de pente.

Cette rupture de pente, positionnée dans le voisinage de la position en "charge ordre de marche", est à l'origine de la remarquable tenue en assiette que procure la suspension CONTRACTIVE au véhicule sur lequel elle est installée.

Néanmoins, deux problèmes sont apparus dès les premières expérimentations de ce procédé de suspension novateur :
1- Le fonctionnement de la suspension dans une zone à cheval sur le seuil des deux raideurs peut générer une dégradation du confort à chaque fois que l'on pénètre la zone de forte raideur (trépidations - bruit de roulement...)
2- La position de référence en "charge ordre de marche" est variable avec le nombre de personnes et la quantité de fret que le véhicule transporte (quand il n'est pas doté d'un dispositif de correction d'assiette).

Sont donc décrites ci-après, les différentes solutions à ces préoccupations.

### I- ADOUCISSEMENT DE LA RUPTURE DE PENTE

La solution simple consiste en un montage en série avec le ressort auxiliaire R2, d'un élément élastique additionnel 1 faisant office de butée progressive additionnelle dont la raideur va croître rapidement vers une valeur assymptotique.

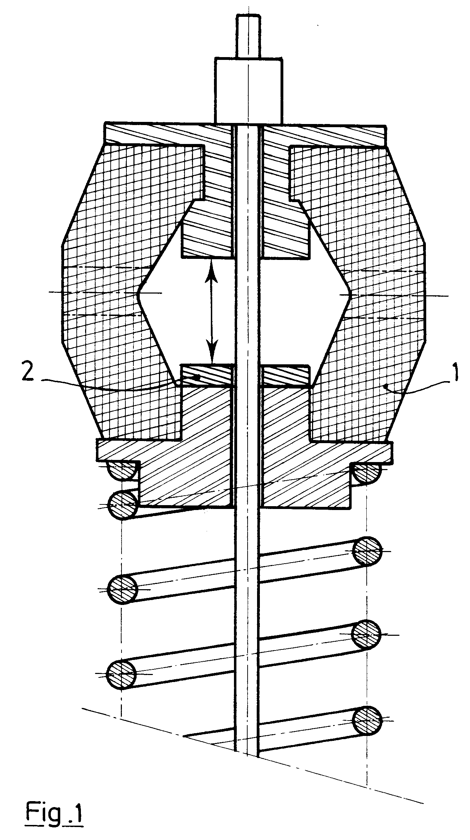

La figure 1 représente une solution expérimentale utilisée sur les prototypes et faisant appel à un élément élastique additionnel 1. Pour mieux maîtriser les paramètres lors de la mise au point, ce montage est doté d'une butée interne 2 à l'élément élastique additionnel, qui délimite la course exacte d'intervention de ce dernier.

Dans ce mode de réalisation, l'élément élastique additionnel est un support de révolution en caoutchouc.

Par ailleurs, lors des recherches de mise au point, il est facile de faire varier la raideur du support de révolution en caoutchouc en le perçant horizontalement dans sa partie médiane.

Dans les montages envisagés ultérieurement sur le plan industriel, les butées additionnelles de mise en appui progressive sur le ressort auxiliaire, sont dotées d'une courbe de raideurs possédant leur propre assymptote.

Les figures 2 à 6 représentent les courbes de raideurs :
- du montage de base à deux ressorts (fig.2)
- du type de butée progressive à utiliser (fig.3)
- du montage de base enrichi d'une butée de progression (fig.4)

Sur ces courbes :
- C représente la course, le sens de la compression
- E représente l'effort

La courbe représente la courbe de raideur.

Une solution efficace pour sauvegarder le confort de la suspension de base du véhicule, voire l'améliorer, consiste en l'utilisation d'un ressort auxiliaire à flexibilité variable (figure 5). Ce sera pratiquement le cas des ressorts du type pneumatique et oléopneumatique. Un compromis pourra être obtenu en établissant une pression initiale (de pressurisation notamment) dans l'élément élastique. On observe alors une rupture de courbe néanmoins beaucoup moins brutale que dans le cas des deux ressorts mécaniques de la solution de base (figure 6). L'utilisation de ces aménagements traduira un souci de bien sauvegarder l'aspect confort du véhicule tandis que la solution de base, sans adoucissement de rupture de courbe, sera plus orientée vers la recherche d'une priorité au comportement, ce qui est le cas des véhicules à caractère sportif.

### II - PRISE EN COMPTE DE LA VARIATION DE CHARGE

"Adouci" ou non, c'est le positionnement de ce point de cassure de la courbe de raideurs de la suspension qui caractérise le comportement du véhicule équipé de la suspension CONTRACTIVE. Or, ce positionnement est difficile à définir lorsque la suspension est souple et que la charge sur l'essieu est variable. Le problème sera donc plus prononcé sur les véhicules à grand nombre de places, tandis qu'une voiture de sport à deux places et à la suspension moins souple sera plus facile à traiter.

En fait, il est indispensable de se donner la possibilité d'ajuster ce point de cassure de raideur lors de chacune des variations de charge du véhicule.

Deux possibilités sont offertes :
1. Intervention sur les ressorts de base sustentateurs du véhicule. Autrement dit "correction d'assiette". Beaucoup de véhicules en sont déjà dotés dans le parc français ; c'est le cas des voitures à suspension oléo-pneumatique. La plupart des constructeurs travaillent actuellement sur le sujet en recherchant des équipements auxiliaires à la suspension de base (principalement sur les véhicules de haut de gamme). Il va de soi que l'implantation de la suspension CONTRACTIVE sur des véhicules déjà dotés de correction d'assiette est donc grandement facilitée.
2. Intervention sur les ressorts auxiliaires de la suspension CONTRACTIVE. Différentes possibilités apparaissent. Les solutions exposées ci-après font toutes appel à l'utilisation de fluides liquides et gazeux.

Ci-après sont décrites des solutions purement mécaniques (et électriques) pour obtenir les mêmes résultats.

La figure 7 est une vue d'un mode de réalisation de correction automatique du point d'attaque du ressort auxiliaire R2 et ce, de manière à réajuster la précontrainte en fonction de la charge, autrement dit d'ajuster le point de cassure de raideur lors de chacune des variations de charge du véhicule.

Les deux ressorts R1,R2 sont en appui sur le châssis en 4.

Le moyen de réglage est un vérin hydraulique 3, placé en "interface" entre la partie mobile 17 du ressort R1 de la suspension 106 et le ressort auxiliaire R2.

La tête 6 du piston mobile 9 est solidaire de la suspension 106 tandis que le corps du vérin 3 prend appui sur le ressort auxiliaire R2. Les deux chambres supérieure 7 et inférieure 8 au piston mobile 9, communiquent entre-elles par une canalisation 10 dont le passage est contrôlé par une électrovanne 11. Le vérin 3 est doté, en sa partie haute, d'une réserve de gaz 12, gaz comprimé tel que de l'azote, qui maintient l'huile utilisée sous pression, par l'intermédiaire d'un plancher séparateur flottant 13.

Lorsque l'électrovanne 11 est fermée, les deux chambres 7 et 8 sont isolées et leur volume respectif ne peut varier. Le piston mobile 9 est monté libre sur la tige 14 et il ne s'en solidarise que lors du mouvement descendant de celle-ci et ceci par l'intermédiaire de la butée progressive 15.

Dans ses mouvements ascendants, la tige 14 peut donc pénétrer le vérin 3, ce qui n'a pour effet que de repousser le plancher séparateur 13 de la valeur correspondant au volume d'huile déplacé par la pénétration de la tige 14.

Lorsque l'ensemble est immobile (véhicule à l'arrêt), si l'électrovanne 11 est ouverte, le piston mobile 9 monte se mettre au contact de la butée 15 de la tige 14 sous l'effet de la poussée du ressort de mise en appui 16 (voir figure 8 et 9), ce ressort de mise en appui 16 se trouve juste au dessous du piston mobile 9. Il suffit alors de refermer l'électrovanne 11 pour que le vérin 3 se verrouille et que le mouvement de la tige 14, lors des déplacements de la suspension, dans le sens de la détente, entraîne le vérin 3 tout entier transmettant ainsi la poussée de la suspension sur le ressort auxiliaire R2.

L'électrovanne 11 est donc destinée à rester fermée lors de l'utilisation du véhicule. Par contre, avant de rouler, à l'issue du chargement (ou du déchargement du véhicule), l'électrovanne 11 est ouverte le temps que le piston mobile 9 se mette en appui sur la butée 15 de tige 14.

Il y a lieu d'observer que ce système permet de repositionner automatiquement le point d'intervention du ressort auxiliaire R2 quelle que soit la charge (donc l'assiette) du véhicule.

Dans la figure 8, il est mis en évidence l'enfoncement de la tige 14 dans le vérin 3. Le piston mobile 9 n'est plus en appui contre la butée 15 de la tige 6. Les flèches F1 de la tige mettent en évidence son enfoncement dans le vérin ainsi que le rôle de la réserve de gaz 12 qui assure le maintien d'une pression d'huile permanente dans l'ensemble du vérin.

Dans la figure 9, lorsque l'électrovanne 11 est ouverte, les deux chambres 7 et 8 communiquent ce qui permet au piston mobile 9 de venir en butée contre la butée 15, il suffit alors de fermer l'électrovanne pour que l'ensemble de la suspension soit fonctionnel et ce jusqu'à une prochaine variation de la charge du véhicule.

Les figures 10, 11 et 12 représentent un mode de réalisation où le ressort auxiliaire R2 est monté coaxialement au vérin 18. On retrouve ledit vérin 18 qui est monté en "interface" entre la partie mobile 107 de la suspension ou du ressort de suspension R1 et le ressort auxiliaire R2. Les deux ressorts sont en appui sur le châssis en 19.

Le vérin 18 comporte deux chambres, une chambre supérieure 20 et une chambre inférieure 21. Ces deux chambres communiquent entre-elles par une canalisation 22 pilotée par une électrovanne 23. Une réserve de gaz comprimé 24 est disposée dans la partie supérieure du vérin 18 séparée de la chambre supérieure 20 par un plancher mobile 25. Un ressort de mise en appui 26 est disposé dans la chambre inférieure 21 entre le piston mobile 27, en contact avec la butée d'extrémité 28 de la tige 29, et le plancher fixe 135 du vérin 18.

Comme indiqué à la figure 11, lorsque le véhicule est mis en charge , la flèche F3 met en évidence la poussée qui permet la pénétration de la tige 29, comme indiqué par la flèche F4. Cette tige 29 pénètre dans le corps du vérin 18.

Comme indiqué à la figure 12, dès que l'électrovanne 23 est ouverte, le piston mobile 27, grâce au ressort de mise en appui 26, vient se mettre en butée contre la butée 28, butée d'extrémité de la tête de la tige 29. A ce stade, il suffit de fermer l'electrovanne 23 pour que la suspension soit opérationnelle.

Les figures 13, 14 et 15 représentent un autre mode de réalisation où le procédé combine un amortisseur avec un ressort auxliaire, selon l'invention, avec un moyen de correction automatique du point d'attaque.

Ce mode de réalisation utilise un vérin hydraulique 30, avec un ensemble amortisseur 34 ressort auxiliaire R2.

Ce mode de réalisation peut être utilisé sur des véhicules où l'amortisseur est monté très distinctivement de l'élément élastique principal, par exemple sur un train arrière à roues tirées et barres de torsion. Le corps du vérin 30 est solidaire d'un fourreau 31 porteur de la butée 32 sur laquelle vient prendre appui le ressort auxiliaire R2. Ce ressort auxiliaire R2 est solidaire, par son autre extrémité, par une butée d'appui 33, du corps de l'amortisseur 34. Le piston 35 du vérin est solidaire de la tige 36 de l'amortisseur 34. Un ressort interne de mise en appui, ressort 37, tend à remonter le corps du vérin 30, donc l'ensemble équipage corps du vérin et fourreau 31, par rapport au piston 35, donc par rapport à la tige 36 d'amortisseur 34. Un petit élément de pressurisation (accumulateur) 38 assure, de manière continue, le parfait remplissage du vérin 30.

Pour le fonctionnement de ce mode de réalisation, la chambre haute 39 et la chambre basse 40, de part et d'autre du piston 35 FIXE, sur la tige 36, communique par une canalisation 104 pilotée par une électrovanne 41.

L'amortisseur 34 est fixé en 42 au châssis et en 43 sur le bras de suspension. Le fonctionnement de ce dispositif ressemble en tous points au dispositif décrit précédemment.

Les figures 14 et 15 mettent en évidence le fonctionnement de ce mode de réalisation.

Dès que le véhicule est mis en charge, l'utilisateur actionne l'électrovanne de communication 41 et ce, de manière à ce que le ressort R2 vienne en appui et qu'il n'y ait pas d'entrefer 44 entre l'extrémité du ressort auxiliaire R2 et la butée d'appui 33 solidaire du corps d'amortisseur 34.

A la figure 14, il est mis en évidence le fait que l'ensemble de l'équipage corps du vérin 30 et de son fourreau 31 s'enfonce, selon la flèche F5, autour du corps de l'amortisseur 34 libérant ainsi le ressort auxiliaire R2 de sa butée d'appui 33, butée fixée au corps de l'amortisseur 34.

Après la mise en charge du véhicule, il suffit d'ouvrir l'électrovanne 41, comme indiqué à la figure 15, pour que, grâce au ressort de mise en appui 37, l'équipage corps du vérin 30 et fourreau 31, remonte pour reprendre sa position initiale telle qu'indiqué en pointillé sur la figure 14 (voir les flèches F6) et ce, de manière à ce que le ressort R2 n'ait plus d'entrefer 44 entre son extrémité supérieure et la butée d'appui 33 solidaire du corps de l'amortisseur 34 ; il suffit alors de fermer l'électrovanne 41 jusqu'à la nouvelle modification de la charge du véhicule.

La figure 16 représente un autre mode de réalisation ; on a utilisé en combinaison un amortisseur et un ressort auxiliaire selon l'invention.

Dans cette figure 16, le gaz de pressurisation 45 est enfermé dans le corps du vérin 46 entre le piston 47 et une cloison plancher flottant 48, traversée par la tige 49 de l'amortisseur 34.

L'électrovanne 50 est intégrée dans le corps du vérin 46 sous la forme d'un clapet 50 tenu en appui sur son siège par un joint torique 51 qui fait office de joint et de ressort de maintien dudit clapet 50. Ce clapet 50 quitte son siège quand le solénoïde 52, qui est situé en dessous, est mis sous tension ; l'huile peut alors se déplacer telle qu'indiqué par des flèches F7 sur la figure 16, entre le haut et le bas du vérin 46, en empruntant l'espace annulaire 53 périphérique du vérin 46. Lorsque le solénoïde 52 n'est pas sous tension, le clapet 50 reste fermé et le vérin 46 est verrouillé ; pour le reste du fonctionnement, ce mode de réalisation fonctionne comme précédemment décrit.

Certaines références ont été conservées dans la mesure où elles conservent les mêmes fonctions que précédemment. Il s'agit notamment du fourreau 31, de la butée d'appui 33 solidaire du corps de l'amortisseur 34, du ressort auxiliaire R2.

Le mode de réalisation représenté dans les figures 17, 18 et 19 est relatif à un ressort auxiliaire de suspension selon l'invention réalisé en technologie oléopneumatique et doté d'un moyen de correction automatique du point d'attaque. Ce mode de réalisation ne peut être utilisé que s'il est possible de le monter en supplément et en parallèle des éléments d'origine de la suspension d'un véhicule.

Réalisé dans le concept des amortisseurs téléscopiques, il possède un volume de gaz comprimé 54 dans sa partie haute 55 entre le corps de l'appareil et un plancher mobile 56 séparant l'huile 57 et le gaz 58.

Ce plancher mobile 56, au repos, prend appui, sur le sommet 5 du tube intérieur 59, lui-même fermé par une cloison fixe 60.

Dans ce tube intérieur 59, on retrouve un piston libre 61 identique à ceux décrits précédemment. La tige 62 de l'appareil prend également appui sur le piston 61 par l'intermédiaire d'une butée progressive 63. Le dessus du piston 61 est en zone à pression atmosphérique 64 (entretenue par la tige creuse 62 qui comporte un conduit 65 de dépressurisation du centre de l'appareil), tandis que la face inférieure du piston 61 est en appui sur de l'huile 66 en légère pression par l'élasticité d'un fourreau 67 en élastomère, quand une électrovanne 68 placée dans le pied 69 de l'appareil ouvre la communication entre l'intérieur de l'appareil et le volume contenu entre le fourreau élastique 67 et l'extérieur dudit appareil.

L'huile 66 contenue sous le piston 61 peut cheminer entre les deux tubes 59,133 jusque dans la chambre qui se trouve entre le plancher mobile supérieur 56 et le plancher fixe 60 qui ferme le haut du tube interne 59. De cette façon, lorsque le piston 61 descend, par le transfert de cette huile, le gaz 58 en partie supérieure se trouve comprimé par la montée du plancher mobile 56 qui le sépare de l'huile 57 ou 66.

Utilisant le même principe que les réalisations décrites précédemment, lorsque le véhicule est à l'arrêt et à l'issue d'une variation de charges, on ouvre l'électrovanne 68 afin de laisser l'huile cheminer entre le fourreau en élastomère 67 et l'intérieur de l'appareil (voir les flèches F8), le piston flottant 61 prend donc place en appui sur la butée progressive 63. L'électrovanne 68 est refermée, le volume d'huile interne reste invariable et définit la position du piston 61.

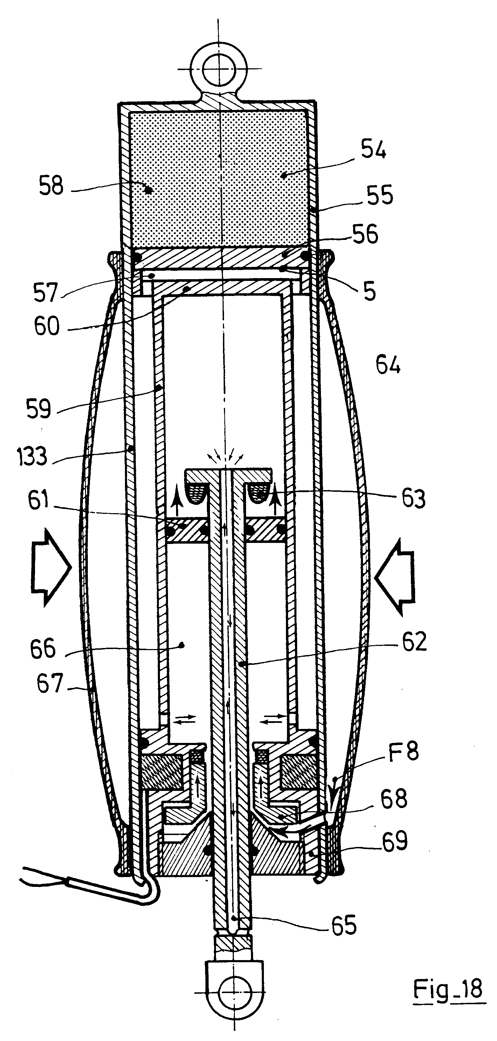

Lorsque la suspension se comprime, la tige 62 pénètre dans l'appareil et ce, comme représenté à la figure 18. Ladite tige 62 pénètre l'appareil en chassant un peu de l'air qui se trouve au-dessus du piston 61 sans engendrer aucun transfert d'huile. Par contre, lorsque la suspension se détend, le piston 61 se trouve sollicité par l'intermédiaire de la butée progressive 63 et par le biais du transfert d'huile, le gaz 58, en partie haute 55, se trouve comprimé assurant ainsi la fonction de ressort à flexibilité variable.

Le mode de réalisation représenté dans les figures 20, 21 et 22 est relatif à une réalisation regroupant les fonctions d'amortissement et de ressort auxiliaire. Ce combiné n'est pas doté de correction du point d'attaque du ressort auxiliaire, son principe de réalisation lui confère une longueur qui en limite le champs d'application. Néanmoins, son utilisation est tout à fait envisageable sur les trains avant du type MAC PHERSON (en position retournée) où la longueur n'est pas contraignante. Par ailleurs, les variations de charge sur l'avant sont très inférieures à celles de l'essieu arrière, ce qui peut dispenser de la présence de la correction du point d'attaque.

L'appareil, selon ce mode de réalisation, fonctionne en circulation d'huile continue, il est pressurisé par un accumulateur oléopneumatique 102 qui fait office également de ressort auxiliaire. La fonction amortisseur est localisée en partie haute. Dans ce mode de réalisation, on a représenté en 80, 81, 82, les courses de chocs, en 83 et 84 les courses de rebond, en 85 la zone de raideur antagoniste.

Ce mode de réalisation est du type amortisseur téléscopique. Le point supérieur permet la fixation en 86 au châssis et le point inférieur de fixation 87 permet la fixation au bras de suspension par la tige 88.

Un piston mobile 89 est fixé sur la tige 88, piston mobile 89 qui comporte des orifices d'ajutage 90 et des clapets 91. Cet ensemble d'ajutages et de clapets fait office d'amortissement aux chocs. Au milieu du corps du vérin, est disposé un plancher fixe 92 qui est retenu par des épaulements internes du corps du vérin, épaulements 93. Ce plancher fixe 92 fait office d'amortissement "au rebond" et comporte également un ensemble ajutage 94 et de clapets 95. Un dernier piston 96 est monté dans la partie basse du vérin solidaire de la tige 88. Ce piston mobile 96 peut venir en regard d'orifices 97 qui permettent à l'huile de circuler vers une réserve d'huile 99 disposée coaxialement au corps du vérin et retenue par une jupe en élastomère 98 ; cette réserve d'huile 99 permet le transfert dans l'accumulateur lors des phases où la suspension CONTRACTIVE fonctionne.

La partie basse du vérin 100 est reliée à un accumulateur oléopneumatique 102 dont une partie comprend du gaz comprimé 103 et l'autre partie de l'huile 101.

Comme représenté à la figure 20, l'appareil est en phase amortissement à la détente. L'huile est comprimée entre le piston 89 (dont les clapets 91 ont obturé les ajutages 90) et le plancher fixe 92 qui lamine l'huile dans ses ajutages 94 tout en opposant l'élasticité de ses clapets 95.

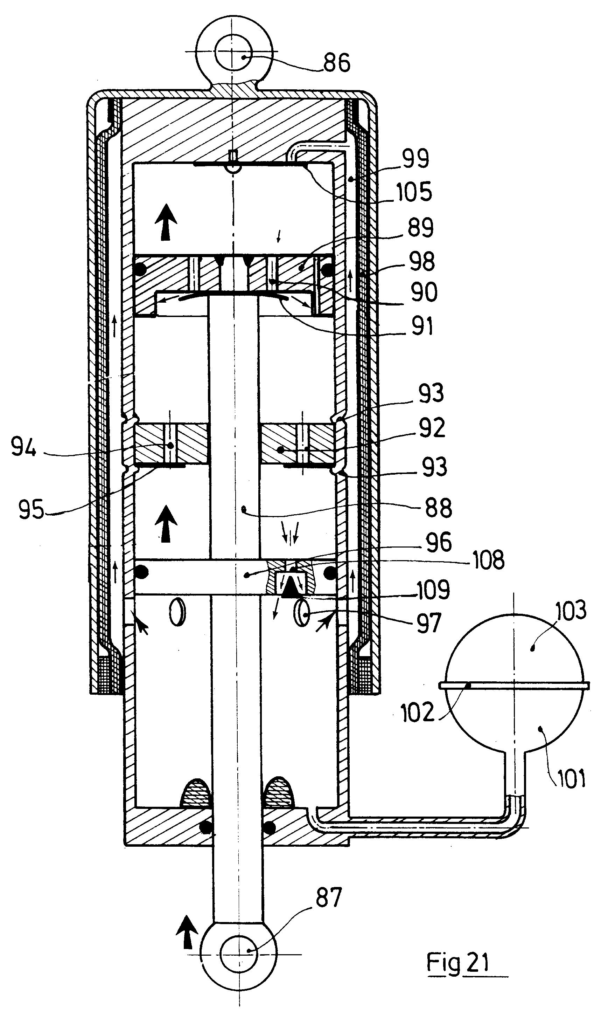

La figure 21 représente l'appareil en phase amortissement au choc. L'huile est comprimée entre la partie haute de l'appareil dont le passage de l'huile a été obstrué par le clapet 105 et le piston mobile 89 qui lamine l'huile dans ses ajutages 90 tout en opposant l'élasticité de ses clapets 91.

Simultanément, l'huile contenue entre la plancher 92 et le piston 96 traverse ce dernier par le passage 108 dont le clapet 109 s'est ouvert.

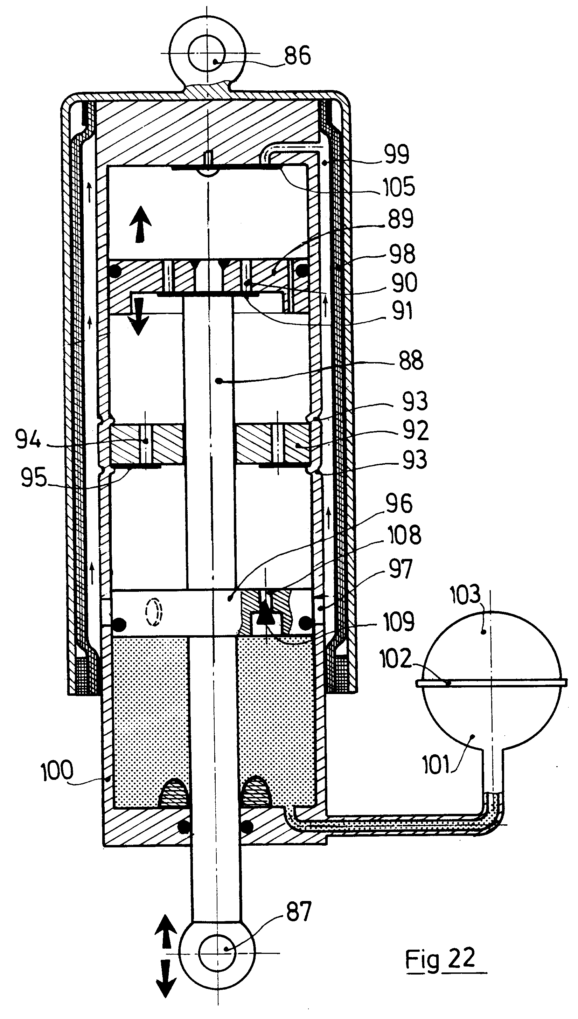

La figure 22 représente l'appareil en "phase CONTRACTIVE". Le piston 96, en descendant, a dépassé la ligne d'orifice 97 ; le clapet 109 obstrue le passage 108. L'huile contenue sous le piston 96 est alors envoyée dans l'accumulateur 102, ce qui génère "l'effort contractif" sur la tige de l'appareil.

Le mode de réalisation représenté à la figure 23 concerne un appareil du type de celui représenté à la figure 17 mais dont la correction nécessitée par les variations de charge, est effectuée par un vérin annulaire à l'appareil.

Comme dans l'appareil représenté à la figure 17, la tige 112 est creuse pour permettre la mise à pression atmosphérique du volume 117. Lors de la course de choc, la tige s'introduit dans l'appareil tandis que le piston mobile 115 reste en appui sur la butée 135. Lors de la course de détente, le piston mobile 115 est entraîné par la tige 112 et la butée 114. L'huile est chassée du volume 116 vers le volume 122 en empruntant l'espace annulaire entre les tubes 119 et 126, ce qui entraîne le déplacement du plancher mobile 124 et la compression du gaz contenu en 125. Ceci engendre "l'effort contractif".

Le tube cylindrique 126 se comporte comme un piston dans le corps du vérin 127. Il détermine deux chambres 128,129. Ces deux chambres 128,129 communiquent entre-elles par une canalisation 130 pourvue d'un réservoir oléopneumatique 131 et pilotée par une électrovanne 132.

Cet ensemble permet de régler l'appareil en fonction de la charge du véhicule.

Lors de l'ouverture de l'électrovanne 132, les deux volumes 128 et 129 sont mis en communication libre, ce qui permet à l'appareil de se repositionner avec le piston libre 115 en appui sur la butée 135, sous l'effet de la pression interne de l'appareil tandis que l'extrémité de la tige 113 est mise en contact du piston 115 sous l'effet du ressort de rappel 136.

Ce mode de réalisation peut être pourvu d'un accéléromètre 134 qui commande le clapet ou électrovanne 132 et bloque ledit clapet à chaque accélération hozizontale du véhicule.

Le fonctionnement de ce mode de réalisation est analogue à ceux déjà décrits précédemment.

### REFERENCES

- 1.: support de révolution en caoutchouc
- 2.: butée interne
- 3.: vérin hydraulique
- 4.: appui sur le châssis
- 5.: sommet du tube intérieur 59
- 6.: tête du piston
- 7.: chambre supérieure
- 8.: chambre inférieure
- 9.: piston mobile
- 10.: canalisation
- 11.: électrovanne
- 12.: réserve de gaz
- 13.: plancher séparateur flottant
- 14.: tige
- 15.: butée progressive de mise en appui
- 16.: ressort de mise en appui
- 17.: partie mobile du ressort de la suspension
- 18.: vérin
- 19.: appui sur le châssis
- 20.: chambre supérieure
- 21.: chambre inférieure
- 22.: canalisation
- 23.: électrovanne
- 24.: réserve de gaz
- 25.: plancher mobile
- 26.: ressort de mise en appui
- 27.: piston mobile
- 28.: butée d'extrémité
- 29.: tige
- 30.: vérin hydraulique
- 31.: fourreau porteur
- 32.: butée
- 33.: butée d'appui
- 34.: amortisseur
- 35.: piston fixe du vérin 30
- 36.: tige de l'amortisseur
- 37.: ressort de mise en appui
- 38.: élément de pressurisation
- 39.: chambre haute
- 40.: chambre basse
- 41.: électrovanne de communication
- 42.: fixation de l'amortisseur au châssis
- 43.: fixation de l'amortisseur sur le bras
- 44.: entrefer
- 45.: gaz de pressurisation
- 46.: vérin
- 47.: piston
- 48.: cloison plancher flottant
- 49.: tige de l'amortisseur
- 50.: électrovanne ou clapet
- 51.: joint torique
- 52.: solénoïde
- 53.: espace annulaire périphérique
- 54.: volume de gaz
- 55.: partie haute de gaz comprimé
- 56.: plancher mobile
- 57.: huile
- 58.: gaz
- 59.: tube intérieur
- 60.: cloison fixe
- 61.: piston libre
- 62.: tige
- 63.: butée progressive
- 64.: zone à pression atmosphérique
- 65.: conduit
- 66.: huile
- 67.: fourreau élastomère
- 68.: électrovanne
- 80.81.82.: courses de chocs
- 83,84.: courses de rebond
- 85.: zone de raideur antagoniste
- 86.: fixation au châssis
- 87.: point inférieur de fixation
- 88.: tige
- 89.: piston mobile
- 90.: orifice d'ajutage
- 91.: clapet
- 92.: plancher fixe
- 93.: épaulement
- 94.: ensemble ajutage
- 95.: clapet
- 96.: piston
- 97.: orifices
- 98.: jupe élastomère
- 99.: réserve d'huile
- 100.: vérin
- 101.: huile
- 102.: accumulateur oléopneumatique
- 103.: gaz comprimé
- 104.: canalisation
- 105.: clapet supérieur
- 106.: suspension
- 107.: partie mobile de la suspension
- 108.: passage huile
- 109.: clapet
- 112.: tige
- 113.: tête
- 114.: butée de progression
- 115.: piston mobile
- 116.: volume
- 117.: volume
- 118.: paroi de séparation
- 119.: tube
- 120,121.: épaulements
- 122.: volume
- 123.: orifices
- 124.: plancher mobile
- 125.: chambre de gaz
- 126.: tube
- 127.: vérin
- 128,129.: chambres
- 130.: canalisation
- 131.: réservoir oléopneumatique
- 132.: électrovanne
- 133.: tube
- 134.: accéléromètre
- 135.: butée d'appui
- 136.: ressort de rappel
- P1,P2.: pression
- R1.: ressort de suspension
- R2.: ressort auxiliaire
- F1 à F8.: flèches

## Revendications

1. Suspension de roue de véhicule utilisant au moins un élément élastique principal de sustentation (R1) et un élément élastique auxiliaire (R2), montés en opposition ou non l'un par rapport à l'autre, ladite suspension utilisant deux raideurs distinctes lors du débattement complet de la roue du véhicule de part et d'autre de la position en ordre de marche de la suspension, le point d'inflexion entre les deux raideurs étant localisé au voisinage de la position en ordre de marche de la suspension, la raideur se trouvant entre la position en ordre de marche et la position roue pendante étant plus grande que la raideur observée lors de l'enfoncement de la roue entre la position en ordre de marche et, la butée de choc caractérisée par le fait
qu'elle utilise un moyen d'adoucissement (1;15;63,114) du changement de raideur.

2. Suspension selon la revendication 1 caractérisée par le fait
qu'elle utilise un moyen de réglage pour ajuster le point de changement de raideur, lors de chacune des variations de charge du véhicule.

3. Suspension selon la revendication 1 caractérisée par le fait que l'élément élastique auxiliaire
consiste en un montage en série avec un ressort auxiliaire (R2), d'un élément élastique additionnel (1) faisant office de butée progressive additionnelle dont la raideur croît rapidement vers une valeur asymptotique ; le montage étant doté d'une butée interne (2) à l'élément élastique (1) qui délimite la course exacte d'intervention de ce dernier.

4. Suspension selon la revendication 1 caractérisée par le fait
que le moyen d'adoucissement du changement de raideur, consiste à utiliser un ressort auxiliaire à flexibilité variable.

5. Suspension selon la revendication 1 caractérisée par le fait que comme éléments élastiques on utilise deux ressorts, à savoir un ressort principal de sustentation (R1) et un ressort auxiliaire (R2) monté en opposition,
que le moyen de réglage pour ajuster le point de changement des raideurs, lors de chacune des variations de charge du véhicule est un vérin hydraulique (3) placé en interface entre la partie mobile (17) du ressort principal (R1) de la suspension (106) et le ressort auxiliaire (R2).

6. Suspension selon la revendication 5 caractérisée par le fait que le vérin hydraulique (3) comporte un piston mobile (9), une
tige (14) montée solidaire de la partie mobile (17) de la suspension (106) et un corps (3) qui prend appui sur le ressort auxiliaire (R2), le vérin (3) étant pourvu de deux chambres supérieures (7) et inférieures (8) au piston mobile (9) qui communiquent entre-elles par une canalisation (10) dont le passage de l'huile est contrôlé par une électrovanne (11), le vérin (3) comportant, dans sa partie haute, une réserve de gaz comprimé (12) maintenant l'huile utilisée sous pression par l'intermédiaire d'un plancher séparateur flottant (13) disposé entre cette réserve (12) et la chambre supérieure (7) ; la chambre inférieure (8) contenant un ressort de mise en appui (16) du piston mobile sur une tête (6) montée sur la tige (14) et comportant une butée d'extrémité (15) de la tige (14) qui fait office de butée progressive de mise en appui (15).

7. Suspension selon la revendication 6 caractérisée par le fait
que l'électrovanne (11) ouvre le passage de l'huile entre les deux chambres (7, 8) pour autoriser l'ajustement après la charge de manière à ce que le piston (9) soit en appui contre la butée (15) de la tige (14) ; l'électrovanne (11) étant fermée pendant la route.

8. Suspension selon l'une quelconque des revendications 5 ou 6 caractérisée par le fait
que le ressort auxiliaire (R2), monté en opposition au ressort principal de sustentation (R1), est monté coaxialement avec le vérin hydraulique (18) qui est placé en interface entre la partie mobile (107) du ressort de suspension (R1) et le ressort auxiliaire (R2).

9. Suspension selon la revendication 5 caractérisée par le fait
qu'elle combine un amortisseur (34) avec un ressort auxiliaire (R2) avec un moyen de correction automatique du point d'attaque, le corps du vérin (30) étant solidaire d'un fourreau (31) porteur d'une butée (32) sur laquelle vient prendre appuie le ressort auxiliaire (R2); ce ressort auxiliaire (R2) étant solidaire, par son autre extrémité, par un butée d'appui (33), du corps de l'amortisseur (34) ; le piston (35) du vérin étant solidaire de la tige (36) de l'amortisseur (34) ; un ressort interne de mise en appui (37) tendant à remonter le corps du vérin (30), et le fourreau (31), par rapport au piston (35) ; un petit élément de pressurisation (38) assurant, de manière continue, le parfait remplissage du vérin (30) ; le vérin (30) étant divisé en deux chambres séparées par le piston (35), les deux chambres (39,40) communiquant par une canalisation (104) qui est commandée par une électrovanne de pressurisation (41), la chambre haute (39) étant pourvue dudit ressort de mise en appui (37), ledit élément de pressurisation (38) étant branché sur la canalisation (104) qui relie les deux chambres (39,40) et ce, de manière à ce que l'ensemble de l'équipage vérin (30) et fourreau (31) se déplace par le ressort de mise en appui (37) dès l'ouverture de l'électrovanne (41) pour le réglage en fonction de la charge.

10. Suspension selon la revendication 5 caractérisée par le fait
qu'elle utilise en combinaison un amortisseur (34) et un ressort auxiliaire (R2); un gaz de pressurisation (45) étant enfermé dans le corps du vérin (46) entre le piston (47) et une cloison plancher flottant (48), traversée par la tige (49) de l'amortisseur (34) une électrovanne (50) étant intégrée dans le corps du vérin (46) sous le forme d'un clapet (50) tenu en appui sur son siège par un joint torique (51) qui fait office de joint et de ressort de maintien dudit clapet (50) ; ce clapet (50) quittant son siège quand un solénoïde (52), qui est situé en dessous, est mis sous tension ; l'huile pouvant alors se déplacer, entre le haut et le bas du vérin (46), en empruntant l'espace annulaire (53) périphérique au vérin (46), le clapet (50) restant fermé et le vérin (46) étant verrouillé lorsque le solénoïde (52) n'est pas sous tension.

11. Suspension selon la revendication 2 caractérisée par le fait
qu'elle utilise un ressort auxiliaire de suspension réalisé en technologie oléopneumatique et doté d'un moyen de correction automatique du point d'attaque monté en supplément et en parallèle des éléments d'origine de la suspension d'un véhicule.

12. Suspension selon la revendication 11 caractérisée par le fait
qu'elle est réalisée dans le concept d'un amortisseur télescopique possèdant un volume de gaz (54) comprimé dans sa partie haute (55) entre le corps de l'amortisseur et un plancher mobile (56) de séparation huile (57) et gaz (58), ce plancher mobile (56), au repos, prenant appui, sur le sommet (5) d'un tube intérieur (59), lui-même fermé par une cloison fixe (60) ; ce tube intérieur (59) comportant un piston libre (61) par rapport à une tige (62) qui fait également office de conduit de dépressurisation du centre de l'appareil ; la tige (62) de l'appareil prenant également appui sur le piston (61) par l'intermédiaire d'une butée progressive (63) ; le dessus du piston (61) étant en zone à pression atmosphérique (64), entretenue par la tige creuse (62) qui comporte un conduit (65) de dépressurisation du centre de l'appareil, tandis que la face inférieure du piston (61) est en appui sur de l'huile (66) en légère pression par l'élasticité d'un fourreau (67) en élastomère, quand une électrovanne (68) placée dans le pied (69) de l'appareil ouvre la communication entre l'intérieur de l'appareil et le volume contenu entre le fourreau élastique (67) et l'extérieur dudit appareil ; l'huile (66) contenue sous le piston (61) pouvant cheminer entre le tube intérieur (59) et le corps (133) jusque dans la chambre, qui se trouve entre le plancher mobile (56) et le cloison fixe (60); le gaz (58) en partie supérieure se trouvant comprimé par la montée du plancher mobile (56) qui le sépare de l'huile (57, 66) lorsque le piston (61) descend par le transfert de cette huile.

13. Suspension selon la revendication 1 caractérisée par le fait
qu'elle est du type amortisseur télescopique, dont le point supérieur permet la fixation (86) au châssis et le point inférieur de fixation (87) permet la fixation au bras de suspension par la tige (88) ; la tige (88) étant pourvue d'un piston mobile (89) fixé sur la tige (88), et comportant des orifices d'ajutage (90) et des clapets (91) ; cet ensemble d'ajutages et de clapets faisant office d'amortissement aux chocs ; un plancher fixe (92) étant disposé au milieu du corps du vérin et étant retenu par des épaulements (93) internes du corps du vérin ; ce plancher fixe (92) faisant office d'amortissement "au rebond" et comportant également un ensemble ajutages (94) et de clapets (95) ; un dernier piston (96) étant monté dans la parie basse du vérin, sur la tige (88) et pouvant venir en regard d'orifices (97) qui permettent à l'huile de circuler vers une réserve d'huile (99) disposée coaxialement au corps du vérin et retenue par une jupe en élastomère (98) ; cette réserve d'huile (99) permetant le transfert dans l'accumulateur lors du debattement de la roue entre la position en ordre de marche et la butée de choc.

14. Suspension selon la revendication 11 caractérisée par le fait
qu'elle utilise, pour la correction nécessitée par les variations de charge, un vérin annulaire; et que la tige (112) est creuse pour permettre la mise à pression atmosphérique du volume (117), la tige (112) s'introduisant lors de la course de choc, dans l'appareil tandis que le piston mobile (115) reste en appui sur la butée (135), le piston mobile (115) étant entraîné lors de la course de détente par la tige (112) et la butée (114); l'huile étant chassée du volume (116) vers le volume (122) en empruntant l'espace annulaire entre les tubes (119) et (126), ce qui entraîne le déplacement du plancher mobile (124) et la compression du gaz contenu en (125) ; le tube cylindrique (126) se comportant comme un piston dans le corps du vérin (127) ; ledit piston déterminant deux chambres (128, 129) qui communiquent entre-elles par une canalisation (130) pourvue d'un réservoir oléopneumatique (131) et pilotée par une électrovanne (132).

15. Suspension selon la revendication 14 caractérisée par le fait
qu'elle est pourvue d'un accéléromètre (134) qui commande le clapet ou électrovanne (132) et bloque ledit clapet à chaque accélération horizontale du véhicule.

## Claims

1. Suspension for a vehicle wheel, using at least one main supporting element (R1) and one auxiliary elastic element (R2), which are mounted in a mutually opposed fashion or in a not opposed fashion, said suspension (2) employing different rigidities on full downward movement of the vehicle wheel on the one side respectively the other side of the standby position of the suspension, the inflection point between the two rigidities being located in the vicinity of the standby position of the suspension, and the rigidity between the standby position and the position with the wheel hanging being greater than the rigidity observed between the standby position and the abutment position as the wheel is pushed in,
**characterized** in that
it uses means for smoothing the transition of the rigidity (1; 15; 63; 114).

2. Suspension according to claim 1,
characterized in that it uses a regulating means in order to adapt the point of rigidity change whenever the load of the vehicle is changed.

3. Suspension according to claim 1,
characterized in that the elastic auxiliary element consists of a series arrangement with an auxiliary spring (R2) and an additional elastic element (1) serving as an additional progressive abutment and having a rigidity which rapidly increases toward an asymptotic value; said arrangement being provided with an inner abutment (2) in the elastic element (1), delimiting the precise course of the effective movement thereof.

4. Suspension according to claim 1,
characterized in that the means for smoothing the rigidity change consists in using an auxiliary spring having a variable flexibility.

5. Suspension according to claim 1,
characterized in that
- as elastic elements two springs, namely a main supporting spring (R1) and an oppositely mounted auxiliary spring (R2), are used,
- the regulating means for adjusting the point of rigidity change upon each load variation of the vehicle is a hydraulic cylinder (3) disposed as an interface between the mobile portion (17) of the main spring (R1) of the suspension (106) and the auxiliary spring (R2).

6. Suspension according to claim 5,
characterized in that
- the hydraulic cylinder (3) comprises a mobile plunger (9), a rod (14) firmly mounted on the mobile portion (17) of the suspension (106), and a cylinder body (3) subjecting the auxiliary spring (R2) to a load, said cylinder (3) being provided with two chambers (7, 8) above and below said mobile plunger (9), respectively, which chambers communicate via a line (10) in which the passage of oil is controlled by a solenoid valve (11), the cylinder (3) comprising a compressed gas reserve (12) in its upper portion, maintaining the oil used under pressure via a floating partition wall (13) arranged between said reserve (12) and the upper chamber (7), the lower chamber (8) containing a load spring (16) for applying a load to the mobile plunger on the head (6) which is mounted on the rod (14) and has a final abutment (15) for the rod (14), serving as a progressive load abutment (15).

7. Suspension according to claim 6,
characterized in that the solenoid valve (11) opens the oil passage between the two chambers (7, 8) in order to facilitate adjustment after loading such that the plunger (9) rests on the abutment (15) of the rod (14), the solenoid valve (11) being closed during travel.

8. Suspension according to one of claims 5 or 6,
characterized in that the auxiliary spring (R2), which is mounted opposed to the main supporting spring (R1), is mounted coaxially with the hydraulic cylinder (18) arranged as an interface between the mobile portion (107) of the suspension spring (R1) and the auxiliary spring (R2).

9. Suspension according to claim 5,
characterized in that a shock absorber (34) having an auxiliary spring (R2) is combined with a means for the automatic correction of the point of attack, the cylinder body (30) being firmly connected to a sleeve (31) carrying an abutment (32) on which the auxiliary spring (R2) rests; said auxiliary spring (R2) being connected via its other end to an abutment (33) of the shock absorber body (34); the plunger (35) of the cylinder being firmly connected to the rod (36) of the shock absorber (34); an internal load spring (37) being effective to raise the cylinder body (30) and the sleeve (31) in relation to the plunger (35); a small pressure element (38) continuously ensuring the complete filling of the cylinder (30); the cylinder (30) being sub-divided into two chambers separated by the plunger (35), the two chambers (39, 40) communicating via a line (104) controlled by a pressurizing solenoid valve (41) for the application of pressure, the upper chamber (39) being provided with the load spring (37), the pressure element (38) being coupled to the line (104) connecting the two chambers (39, 40) so that on opening of the solenoid valve (41) for the load- responsive control the entirety of the cylinder (30) and the sleeve (31) is moved by the load spring (37).

10. Suspension according to claim 5,
characterized in that a combination of a shock absorber (34) and an auxiliary spring (32) is used, a compressed gas (45) is enclosed in the cylinder body (46) between the plunger (47) and a floating partition wall (48) through which a rod (49) of the shock absorber (34) extends, a solenoid valve (50) is integrated in the cylinder body (46) in the form of a valve flap (50), which is held pressed into its seat by a toroidal gasket (51) serving as a gasket and spring for holding the valve flap (50), the valve flap (50) abandoning its seat when a magnetic coil (52) arranged therebelow is energized, whereby the oil is enabled to flow between the upper and lower portions of the cylinder (46) via the annular space (53) surrounding the cylinder (46), and the valve flap (50) remaining closed and the cylinder (46) being locked when the coil (52) is not energized.

11. Suspension according to claim 2,
characterized in that it employs an auxiliary suspension spring designed pursuant to the pneumo-oil hydraulics technique, which spring is provided with a means for the automatic correction of the point of attack, mounted in addition and in parallel to the original suspension elements of a vehicle.

12. Suspension according to claim 11,
characterized in that it is realized in accordance with the concept of a telescopic shock absorber which has a compressed gas volume (54) in its upper portion (55) between the body of the shock absorber and a mobile partition wall (56) for separating the oil (57) from the gas (58), which mobile partition wall (56), in its inoperative position, rests on top (5) of an inner pipe (59) which, in turn, is sealed by a firm partition wall (60); that the inner pipe (59) comprises a plunger (61) which is freely mobile relative to a rod (62) which simultaneously serves as a pressure relief line of the centre of the device; that the rod (62) of the device equally rests on the plunger (61) via a progressive abutment; that the upper side of the plunger (61) is located in a section (64) having atmospheric pressure which is maintained by the hollow rod (62), which rod comprises a pressure relief line (65) for the centre of the device, whereas the underside of the plunger (61) rests on oil which, as a result of the elasticity of an elastomer sleeve (67), is subjected to a slight pressure if a solenoid valve (68) disposed in the base (69) of the device opens the connection between the interior of the device and the volume between the elastic sleeve (67) and the exterior of the device; that the oil (66) contained below the plunger (61) can move between the inner pipe (59) and the body (133) as far as into the chamber located between the mobile partition wall (56) and the firm partition wall (60); and in that the gas in the upper portion is compressed due to the mobile partition wall (56) separating it from the oil (57, 66) being raised when the plunger (61) moves downwards due to displacement of this oil.

13. Suspension according to claim 1,
characterized in that it is of the telescopic shock absorber type, whose upper point facilitates the mounting (86) on the chassis, and whose lower mounting point (87) enables mounting on the suspension arm via the rod (88), the rod (88) being provided with a mobile plunger (89) fixed on the rod (88), which plunger comprises coupling openings (90) and valve flaps (91), the system including coupling openings and valve flaps serving for the shock absorption; in that a firm partition wall (92) is disposed in the centre of the cylinder body and is held by inner shoulders (93) of the cylinder body; in that this firm partition wall (92) serves for dampening any rebounding and equally comprises a system of coupling openings (94) and valve flaps (95); in that a last plunger (96) is mounted in the lower portion of the cylinder on the rod (88) and can arrive in front of openings (97) which make it possible for the oil to flow to an oil reserve (99) disposed coaxially to the cylinder body, which is held by a skirt made of an elastomer material (98); said oil reserve (99) facilitating the shifting into the accumulator if the wheel is moving between the standby position and the shock abutment.

14. Suspension according to claim 11,
characterized in that for the correction required due to load variations an annular cylinder is used, in that the rod (112) is hollow so that the volume (117) can be put under atmospheric pressure, in that in the course of the shock-type movement the rod (112) penetrates into the device, whereas the mobile plunger (115) keeps resting on the abutment (135), in that in the course of the relief movement the mobile plunger (115) is taken along by the rod (112) and the abutment (114); that the oil is forced from volume (116) into the volume (122) via the annular intermediate space between the tubes (119) and (126), which produces the displacement of the mobile wall (124) and the compression of the gas contained in (125); in that the cylindrical tube (126) behaves like a plunger in the body of the cylinder (127), the plunger defining two chambers (128, 129) communicating via a line (130) which is provided with an oil-pneumatic reservoir (131) and controlled by a solenoid valve (132).

15. Suspension according to claim 14,
characterized in that the same is provided with a velocity measuring means (134) controlling the valve flap or the solenoid valve (132) and which blocks the valve flap at any horizontal acceleration of the vehicle.

## Patentansprüche

1. Aufhängung für ein Fahrzeugrad, mit wenigstens einem Hauptunterstützungselement (R1) und einem elastischen Hilfselement (R2), die einander entgegengesetzt oder nicht entgegengesetzt montiert sind, wobei die Aufhängung (2) unterschiedliche Steifigkeiten beim Vollausschlag des Fahrzeugrads auf der einen beziehungsweise der anderen Seite der Betriebsbereitschaftsposition der Aufhängung verwendet, wobei der Umkehrpunkt zwischen den zwei Steifigkeiten in der Nähe der Betriebsbereitschaftsposition der Aufhängung liegt, und die Steifigkeit zwischen der Betriebsbereitschaftsposition und der Position mit hängendem Rad größer ist als die beim Eindrücken des Rades zwischen der Betriebsbereitschaftsposition und der Anschlagposition beobachtete Steifigkeit,
dadurch **gekennzeichnet,**
daß sie ein Mittel zum Glätten des Übergangs der Steifigkeit (1; 15; 63; 114) verwendet.

2. Aufhängung nach Anspruch 1,
dadurch gekennzeichnet, daß sie ein Regelmittel verwendet, um den Punkt der Steifigkeitsänderung bei jeder Laständerung des Fahrzeugs anzupassen.

3. Aufhängung nach Anspruch 1,
dadurch gekennzeichnet, daß das elastische Hilfselement aus einer Reihenanordnung mit einer Hilfsfeder (R2) und einem zusätzlichen elastischen Element (1) besteht, das als fortschreitender zusätzlicher Anschlag dient, dessen Steifigkeit schnell gegen einen asymptotischen Wert wächst; wobei die Anordnung mit einem inneren Anschlag (2) im elastischen Element (1) versehen ist, das den genauen Verlauf von dessen Wirkbewegung begrenzt.

4. Aufhängung nach Anspruch 1,
dadurch gekennzeichnet, daß das Mittel zur Glättung der Steifigkeitsänderung in der Verwendung einer Hilfsfeder mit veränderlicher Flexibilität besteht.

5. Aufhängung nach Anspruch 1,
dadurch gekennzeichnet,
- daß als elastische Elemente zwei Federn, darunter eine Hauptunterstützungsfeder (R1) und eine entgegengesetzt montierte Hilfsfeder (R2), verwendet werden,
- daß das Regelmittel zum Einstellen des Steifigkeitsänderungspunkts bei jeder Beladungsänderung des Fahrzeugs ein Hydraulikzylinder (3) ist, der als Übergang zwischem dem beweglichen Bereich (17) der Hauptfeder (R1) der Aufhängung (106) und der Hilfsfeder (R2) angeordnet ist.

6. Aufhängung nach Anspruch 5,
dadurch gekennzeichnet,
- daß der Hydraulikzylinder (3) einen beweglichen Kolben (9), eine fest am beweglichen Bereich (17) der Aufhängung (106) montierte Stange (14) und einen Zylinderkörper (3) umfaßt, der die Hilfsfeder (R2) belastet, wobei der Zylinder (3) mit zwei Kammern (7, 8) oberhalb beziehungsweise unterhalb des beweglichen Kolbens (9) versehen ist, die untereinander durch eine Leitung (10) in Verbindung stehen, in der der Öldurchgang durch ein Magnetventil (11) gesteuert wird, wobei der Zylinder (3) in seinem oberen Bereich eine Druckgasreserve (12) aufweist, die das verwendete Öl über eine schwebende Trennwand (13) unter Druck hält, die zwischen dieser Reserve (12) und der oberen Kammer (7) angeordnet ist, wobei die untere Kammer (8) eine Belastungsfeder (16) zur Belastung des beweglichen Kolbens an dem an der Stange (14) montierten Kopf (6) enthält und einen Endanschlag (15) für die Stange (14) aufweist, der als fortschreitender Belastungsanschlag (15) dient.

7. Aufhängung nach Anspruch 6,
dadurch gekennzeichnet, daß das Magnetventil (11) den Öldurchgang zwischen den zwei Kammern (7, 8) öffnet, um die Einstellung nach der Beladung so zu ermöglichen, daß der Kolben (9) am Anschlag (15) der Stange (14) anliegt, wobei das Magnetventil (11) während der Fahrt geschlossen ist.

8. Aufhängung nach einem der Ansprüche 5 oder 6,
dadurch gekennzeichnet, daß die Hilfsfeder (R2), die der Hauptunterstützungsfeder (R1) entgegengesetzt montiert ist, koaxial mit dem Hydraulikzylinder (18) montiert ist, der als Übergang zwischen dem beweglichen Bereich (107) der Aufhängungsfeder (R1) und der Hilfsfeder (R2) angeordnet ist.

9. Aufhängung nach Anspruch 5,
dadurch gekennzeichnet, daß ein Stoßdämpfer (34) mit einer Hilfsfeder (R2) mit einem Mittel zu automatischen Korrektur des Einsetzpunkts kombiniert ist, wobei der Zylinderkörper (30) fest mit einer Hülse (31) verbunden ist, welche einen Anschlag (32) trägt, auf dem die Hilfsfeder (R2) lastet; wobei die Hilfsfeder (R2) über ihr anderes Ende mit einem Anschlag (33) des Körpers des Stoßdämpfers (34) verbunden ist; der Kolben (35) des Zylinders mit der Stange (36) des Stoßdämpfers (34) fest verbunden ist; eine interne Belastungsfeder (37) wirkt, um den Zylinderkörper (30) und die Hülse (31) gegen den Kolben (35) anzuheben; ein kleines Druckelement (38) fortlaufend die vollständige Füllung des Zylinders (30) sicherstellt; der Zylinder (30) in zwei durch den Kolben (35) getrennte Kammern unterteilt ist, wobei die zwei Kammern (39, 40) durch eine Leitung (104) verbunden sind, die durch ein Magnetventil (41) zur Druckbeaufschlagung gesteuert wird, die obere Kammer (39) mit der Belastungsfeder (37) versehen ist, das Druckelement (38) an die Leitung (104) angeschlossen ist, die die zwei Kammern (39, 40) verbindet, so daß beim Öffnen des Magnetventils (41) zur ladungsabhängigen Regelung die Gesamtheit von Zylinder (30) und Hülse (31) durch die Belastungsfeder (37) bewegt wird.

10. Aufhängung nach Anspruch 5,
dadurch gekennzeichnet, daß in Kombination ein Stoßdämpfer (34) und eine Hilfsfeder (32) verwendet werden, ein Druckgas (45) im Zylinderkörper (46) zwischem dem Kolben (47) und einer schwebenden Trennwand (48) eingeschlossen ist, die von der Stange (49) des Stoßdämpfers (34) durchlaufen wird, ein Magnetventil (50) in den Zylinderkörper (46) in Form einer Ventilklappe (50) integriert ist, die auf ihrem Sitz angedrückt durch eine torusförmige Dichtung (51) gehalten wird, die als Dichtung und als Feder zum Halten der Ventilklappe (50) dient, wobei die Ventilklappe (50) ihren Sitz verläßt, wenn eine darunterliegende Magnetspule (52) unter Spannung gesetzt wird, wobei sich dann das Öl zwischen dem oberen und unteren Bereich des Zylinders (46) durch den den Zylinder (46) umgebenden ringförmigen Zwischenraum (53) bewegen kann und die Ventilklappe (50) gesperrt bleibt und der Zylinder (46) arretiert ist, wenn die Spule (52) nicht unter Spannung steht.

11. Aufhängung nach Anspruch 2,
dadurch gekennzeichnet, daß sie eine in der Pneumatik-Ölhydraulik-Technik ausgeführte Hilfsaufhängungsfeder verwendet, die mit einem Mittel zur automatischen Korrektur des Einsetzpunkts versehen ist, das zusätzlich und parallel zu den ursprünglichen Aufhängungselementen eines Fahrzeugs montiert ist.

12. Aufhängung nach Anspruch 11,
dadurch gekennzeichnet, daß sie nach dem Konzept eines Teleskopstoßdämpfers verwirklicht ist, der ein Druckgasvolumen (54) in seinem oberen Bereich (55) zwischen dem Körper des Stoßdämpfers und einer beweglichen Trennwand (56) zur Trennung von Öl (57) und Gas (58) besitzt, welche bewegliche Trennwand (56) in Ruhestellung auf der Oberseite (5) eines inneren Rohrs (59) lastet, das seinerseits durch eine feste Trennwand (60) verschlossen ist, daß das innere Rohr (59) einen Kolben (61) aufweist, der, bezogen auf eine Stange (62), frei beweglich ist, die gleichzeitig als Druckentlastungsleitung der Mitte der Vorrichtung dient; daß die Stange (62) der Vorrichtung über einen fortschreitenden Anschlag ebenfalls auf dem Kolben (61) lastet; daß die Oberseite des Kolbens (61) in einem Abschnitt (64) mit atmosphärischem Druckliegt, der von der hohlen Stange (62) aufrechterhalten wird, die eine Druckentlastungsleitung (65) für die Mitte der Vorrichtung umfaßt, wohingegen die Unterseite des Kolbens (61) auf Öl lastet, das aufgrund der Elastizität einer Hülse (67) aus Elastomer unter leichtem Druck steht, wenn ein im Fuß (69) der Vorrichtung angeordnetes Magnetventil (68) die Verbindung zwischen dem Inneren der Vorrichtung und dem Volumen zwischen der elastischen Hülse (67) und dem Äußeren der Vorrichtung öffnet; daß das unter dem Kolben (61) enthaltene Öl (66) sich zwischen dem inneren Rohr (59) und dem Körper (133) bis in die Kammer bewegen kann, die sich zwischen der beweglichen Trennwand (56) und der festen Trennwand (60) befindet; und daß das Gas im oberen Bereich durch den Anstieg der beweglichen Trennwand (56), die es vom Öl (57, 66) trennt, komprimiert wird, wenn der Kolben (61) sich durch Verlagerung dieses Öls abwärts bewegt.

13. Aufhängung nach Anspruch 1,
dadurch gekennzeichnet, daß sie vom Teleskopstoßdämpfertyp ist, deren oberer Punkt die Befestigung (86) am Fahrgestell ermöglicht, und deren unterer Befestigungspunkt (87) die Befestigung am Aufhängungsarm über die Stange (88) ermöglicht, wobei die Stange (88) mit einem an der Stange (88) befestigten beweglichen Kolben (89) versehen ist, der Ansatzöffnungen (90) und Ventilklappen (91) aufweist, wobei das System von Ansatzöffnungen und Ventilklappen zur Stoßdämpfung dient; daß eine feste Trennwand (92) in der Mitte des Zylinderkörpers angeordnet und durch innere Schultern (93) des Zylinderkörpers gehalten wird; daß diese feste Trennwand (92) zur Dämpfung beim Zurückprallen dient und ebenfalls ein System von Ansatzöffnungen (94) und Ventilklappen (95) aufweist; daß ein letzter Kolben (96) im unteren Bereich des Zylinders an der Stange (88) montiert ist und vor Öffnungen (97) gelangen kann, die es dem Öl ermöglichen, zu einem koaxial zum Zylinderkörper angeordneten Ölvorrat (99) zu fließen, der von einer Schürze aus Elastomer (98) gehalten wird; wobei dieser Ölvorrat (99) die Verlagerung in den Akkumulator ermöglicht, wenn das Rad zwischen der Fahrbereitschaftsposition und dem Stoßanschlag ausgelenkt ist.

14. Aufhängung nach Anspruch 11,
dadurch gekennzeichnet, daß zur aufgrund der Beladungsänderungen erforderlichen Korrektur ein ringförmiger Zylinder verwendet wird, daß die Stange (112) hohl ist, damit das Volumen (117) unter Atmosphärendruck gesetzt werden kann, daß die Stange (112) im Laufe der Stoßbewegung in die Vorrichtung eindringt, wohingegen der bewegliche Kolben (115) weiterhin auf dem Anschlag (135) lastet, daß der bewegliche Kolben im Laufe der Entspannungsbewegung von der Stange (112) und dem Anschlag (114) mitgenommen wird; daß das Öl vom Volumen (116) über den ringförmigen Zwischenraum zwischen den Rohren (119) und (126) in das Volumen (122) getrieben wird, was die Verlagerung der beweglichen Wand (124) und die Kompression des in (125) enthaltenen Gases mit sich bringt; das zylindrische Rohr (126) sich wie ein Kolben im Körper des Zylinders (127) verhält, wobei der Kolben zwei Kammern (128, 129) definiert, die untereinander durch eine Leitung (130) verbunden sind, die mit einem ölpneumatischen Reservoir (131) versehen und durch ein Magnetventil (132) gesteuert ist.

15. Aufhängung nach Anspruch 14,
dadurch gekennzeichnet, daß diese mit einer Geschwindigkeitsmeßeinrichtung (134) versehen ist, die die Ventilklappe oder das Magnetventil (132) steuert und die Ventilklappe bei jeder horizontalen Beschleunigung des Fahrzeugs blockiert.
